# EUROPÄISCHE PATENTANMELDUNG

(11) **EP 4 596 458 A1**
(43) Veröffentlichungstag der Anmeldung: **06.08.2025**
(21) Anmeldenummer: 24000019.0
(22) Anmeldetag: 05.02.2024
(51) Int. Cl.: B65G 15/58, B65G 21/20, B65H 3/12, B65H 5/22, B65H 11/00, B65H 29/24, B65H 29/32, B65G 15/42

(54) **FÖRDERGURT FÜR DEN TRANSPORT VON WERKSTÜCKEN UND ZUGEHÖRIGE UNTERDRUCKVORRICHTUNG**

(71) Anmelder: Neuhäuser GmbH, 44532 Lünen (DE)
(72) Erfinder: Weischenberg, Tobias, 44532 Lünen (DE)
(74) Vertreter: Andrejewski - Honke Patent- und Rechtsanwälte Partnerschaft mbB

(57) **Zusammenfassung**

Gegenstand der Erfindung ist ein Fördergurt (2) für den Transport von Werkstücken, insbesondere für den hängenden Transport von tafelförmigen Werkstücken (1) wie Blechen oder Platten. Dazu ist der Fördergurt (2) mit einem Gurtkörper (13) mit Ansaugöffnungen (12) ausgerüstet, welche mit einem Unterdruckkanal (11) in einer Haltevorrichtung (4) in Verbindung stehen. Der Fördergurt (2) wird mit den hieran anzulegenden Werkstücken (1) an der Haltevorrichtung (4) in Transportrichtung (T) vorbeigeführt. Die Werkstücke (1) werden durch Erzeugen von Unterdruck im Unterdruckkanal (11) und damit an den Ansaugöffnungen (12) am Fördergurt (2) festgehalten und zusammen mit dem Fördergurt (2) in der Transportrichtung (T) bewegt. Die jeweilige Ansaugöffnung (12) ist im Bereich einer zugehörigen Erhebung (14) gegenüber dem Gurtkörper (13) angeordnet. Erfindungsgemäß ist die eckige Erhebung (14) mit einer ihrem Umriss folgenden Saugtasche (15, 16) und der wenigstens einen in die Saugtasche (15, 16) mündenden Ansaugöffnung (12) ausgebildet.

## Beschreibung

Die Erfindung betrifft einen Fördergurt für den Transport von Werkstücken, insbesondere für den hängenden Transport von tafelförmigen Werkstücken wie Blechen oder Platten, mit einem Gurtkörper mit Ansaugöffnungen, welche mit einem Unterdruckkanal in einer Haltevorrichtung in Verbindung stehen, wobei der Fördergurt mit den hieran anzulegenden Werkstücken an der Haltevorrichtung in Transportrichtung vorbeigeführt und die Werkstücke durch Erzeugung von Unterdruck im Unterdruckkanal und damit an den Ansaugöffnungen am Fördergurt festgehalten und zusammen mit dem Fördergurt in der Transportrichtung bewegt werden, und wobei die jeweilige Ansaugöffnung im Bereich einer zugehörigen Erhebung gegenüber dem Gurtkörper angeordnet ist.

Solche Fördergurte für den Transport von Werkstücken werden beispielhaft im auf die Anmelderin zurückgehenden Patent EP 0 893 371 B1 beschrieben. Ein vergleichbarer Fördergurt ist Gegenstand der deutschen Offenlegungsschrift DE 30 01 531 A1. in dem letztgenannten Fall sind jeweils kreisförmige Erhebungen gegenüber einer Kernschicht als Gurtkörper vorgesehen. Die jeweilige Erhebung umschließt eine den Gurtkörper durchsetzende und eine Vakuumverbindung herstellende Durchbrechung als Ansaugöffnung.

Im erstgenannten Fall der EP 0 893 371 B1 handelt es sich bei der Erhebung um jeweils Saugnäpfe mit innenseitigen Noppen. Die Noppen sind zur Begrenzung des Federweges des Saugnapfes beim Anlegen des zu transportierenden Werkstückes ausgebildet.

Darüber hinaus und unabhängig hiervon ist durch die WO 2021/089315 A1 eine Vorrichtung zum insbesondere aufliegenden Transport von vorzugsweise tafelförmigen Werkstücken mittels Unterdruck bekannt. Der Unterdruck wird dabei durch zumindest ein Gebläse erzeugt. Bei dem Gebläse handelt es sich um einen Radialventilator, welcher ein Laufrad mit rückwärts gekrümmten Schaufeln aufweist. Dadurch kann ein Verrutschen der Werkstücke auch bei starken Beschleunigungen und Verzögerungen gegenüber dem Fördergurt aufwandsarm vermieden werden.

Etwaige starke Beschleunigungen oder Verzögerungen von tafelförmigen Werkstücken stoßen dann an Grenzen, wenn die Anlage des betreffenden tafelförmigen Werkstückes über die gesamte Länge am Fördergurt nicht oder nicht mehr vollständig gewährleistet ist. Das gilt beispielhaft für sogenannte Bipolarplatten, welche in Verbindung mit Brennstoffzellen zum Einsatz kommen. Tatsächlich handelt es sich bei solchen Bipolarplatten um ein Schlüsselelement von Direktmethanol-Brennstoffzellen. Dazu sorgen die fraglichen Bipolarplatten nicht nur für eine elektrische Verbindung der Brennstoffzellen und die Verteilung der Gase über die Plattenfläche, sondern auch für die Gastrennung zwischen angrenzenden Zellen, die Kühlung und die Dichtung nach außen.

Aus diesem Grund verfügen solche Bipolarplatten nicht nur über einen flächigen Träger, sondern auch eine aufgebrachte ein- oder beidseitige sowie umlaufende Dichtung. Der Transport solcher tafelförmigen Werkstücke bzw. Bipolarplatten und ihre Beschleunigung und Verzögerung ist insofern problematisch, als die an dieser Stelle meistens vorgesehene umlaufende Dichtung zu einer mehr oder minder ausgeprägten teilweisen Beabstandung einer ansonsten ebenen Anlagefläche des Werkstückes gegenüber dem Gurtkörper sorgt. Um dennoch eine einwandfreie Anlage zu gewährleisten, kann mit mehreren Erhebungen gegenüber dem Gurtkörper und zumindest einer Ansaugöffnung gearbeitet werden, die in die betreffende Erhebung mündet. Allerdings sind die bisherigen Lösungen für den Transport ungeeignet, weil eine Anpassung an die spezifischen tafelförmigen Werkstücke in Gestalt der Bipolarplatten fehlt. Hier will die Erfindung insgesamt Abhilfe schaffen.

Der Erfindung liegt das technische Problem zugrunde, einen derartigen Fördergurt für den Transport von Werkstücken und insbesondere tafelförmigen Werkstücken wie Blechen oder Platten so weiterzuentwickeln, dass eine optimale Anlage am Fördergurt auch dann gewährleistet ist, wenn das tafelförmige Werkstück mit einer umlaufenden Erhebung wie beispielsweise einer Dichtung ausgerüstet ist. Dadurch sollen auch hohe Beschleunigungs- und Verzögerungskräfte ohne Verrutschen übertragen werden können. Daneben soll eine mit dem entsprechend gestalteten Fördergurt ausgerüstete Vorrichtung zur Verfügung gestellt werden.

Zur Lösung dieser technischen Problemstellung schlägt die Erfindung bei einem gattungsgemäßen Fördergurt für den Transport von Werkstücken vor, dass die eckige Erhebung mit einer ihrem Umriss folgenden Saugtasche und der wenigstens einen in die Saugtasche mündenden Ansaugöffnung ausgebildet ist.

Hierbei geht die Erfindung zunächst einmal von der Erkenntnis aus, dass die Erhebung von ihrem Umriss her an die Anlagefläche des Werkstückes angepasst werden kann. Dazu Ist die Erhebung zunächst einmal eckig gestaltet, verfügt also nicht über einen runden Umriss sondern Ecken. Der Umriss beschreibt also einen geschlossenen Polygonzug. Die Anlagefläche des tafelförmigen Werkstückes korrespondiert in diesem Zusammenhang zu einer Fläche, die frei von signifikanten Erhebungen ausgebildet ist, folglich problemlos und dauerhaft über die Ansaugöffnung und die Saugtasche angesaugt werden kann. Außerdem lassen sich hierdurch große Beschleunigungen und Verzögerungen realisieren, die über den Fördergurt auf das betreffende tafelförmige Werkstück übertragen werden.

Übertragen auf die beispielhaft zu transportierenden Bipolarplatten meint die Anlagefläche im betrachteten Fall eine zentrale ebene Fläche (der Bipolarplatte), die von einer umlaufenden Dichtung umschlossen wird. Solange folglich die Erhebung des Fördergurtes von ihrem Umriss her an die betreffende Fläche im Innern der umgebenden Dichtung angepasst ist, lässt sich die betreffende Bipolarplatte einwandfrei ansaugen und gegenüber dem Fördergurt festhalten. Das gilt auch dann, wenn der Fördergurt signifikante Beschleunigungen und Verzögerungen vollführt. Hierin sind die wesentlichen Vorteile zu sehen.

Nach vorteilhafter Ausgestaltung ist die Erhebung nicht nur mit der ihrem Umriss folgenden Saugtasche ausgerüstet, sondern verfügt über lediglich eine einzige Ansaugöffnung, die zentral in die betreffende Saugtasche mündet. Grundsätzlich können natürlich auch mehrere Ansaugöffnungen Im Innern der Saugtasche vorhanden sein, um den erforderlichen Unterdruck in der Saugtasche zu erzeugen. Im Regelfall wird jedoch mit lediglich einer einzigen Ansaugöffnung gearbeitet, die darüber hinaus zentral in die Saugtasche mündet, damit über die gesamte Fläche der Saugtasche gesehen ein durchgängig gleicher Unterdruck beobachtet wird.

Außerdem hat es sich in diesem Zusammenhang als günstig erwiesen, wenn die Ansaugöffnung längserstreckt in der Transportrichtung des Fördergurtes ausgebildet ist. Das lässt sich zum Beispiel dadurch umsetzen, dass die Ansaugöffnung einen elliptischen Querschnitt aufweist. Sofern mit mehreren Ansaugöffnungen im Innern der Saugtasche gearbeitet wird, empfiehlt es sich, die mehreren Ansaugöffnungen längserstreckt zu platzieren, und zwar in der Transportrichtung. Aus Gründen einer einfachen Fertigung greift man jedoch im Allgemeinen auf die einzige Ansaugöffnung zurück, die dazu typischerweise mit dem elliptischen Querschnitt ausgerüstet ist.

Die Saugtasche als solche ist im Allgemeinen mehrteilig mit in Transportrichtung verlaufendem Längskanal und wenigstens einem quer zur Transportrichtung verlaufenden Querkanal ausgebildet. Grundsätzlich können auch mehrere parallel zueinander verlaufende Längskanäle in der Transportrichtung realisiert sein. In der Regel wird hier jedoch mit einem einzigen Längskanal in der Transportrichtung gearbeitet, der darüber hinaus und regelmäßig auf einer Längssymmetrieachse des längserstreckten Fördergurtes bzw. seines Gurtkörpers verläuft und angeordnet ist. Dadurch können die mehreren Querkanäle grundsätzlich beidseitig des zentralen Längskanals verlaufen. Außerdem ist die Auslegung in diesem Zusammenhang vorteilhaft so getroffen, dass der zentrale Längskanal jeweils beidseitig an die zentrale Ansaugöffnung anschließt. Dadurch werden optimale Unterdruckverhältnisse nicht nur in dem an die jeweils zentrale Ansaugöffnung jeweils beidseitig anschließenden zentralen Längskanal beobachtet, sondern auch in den vom Längskanal jeweils ausgehenden beidseitigen Querkanälen.

Damit das tafelförmige Werkstück praktisch über die gesamte Fläche der Erhebung angesaugt wird, reichen die Querkanäle bis jeweils zum Rand der Erhebung. Dabei hat es sich als besonders günstig erwiesen, wenn die Querkanäle jeweils kammartig sowie gleich beabstandet von dem zentralen Längskanal ausgehen. Hierdurch wird eine flächige sowie ausgehend vom zentralen Längskanal beidseitig kammartig gestaltete Saugtasche zur Verfügung gestellt, die großflächig den erforderlichen Unterdruck erzeugt, um auf diese Weise die Anlagefläche des tafelförmigen Werkstückes und insbesondere der zuvor bereits beschriebenen Bipolarplatten nicht nur ansaugend, sondern dauerhaft halten zu können. Das gilt auch und insbesondere für den Fall, dass der auf diese Weise gestaltete Fördergurt hohe Beschleunigungen respektive Verzögerungen vollführt.

In vergleichbare Richtung zielen die Erfindungsmaßnahmen, wonach die Erhebung rechteckförmig ausgebildet ist. Dabei wird man meistens so vorgehen, dass der Gurtkörper des Fördergurtes in regelmäßigen Abständen jeweils mit einer betreffenden rechteckförmigen Erhebung ausgerüstet wird. Die einzelnen Erhebungen sind dabei mit einem solchen Abstand voneinander angeordnet, dass im Beispielfall einzelne Bipolarplatten jeweils einzeln von der entsprechenden Erhebung angesaugt und hieran gehalten werden, und zwar ohne dass einzelne Bipolarplatten aneinander stoßen oder in der Transportrichtung überlappen. Das erreicht die Erfindung derart, dass die Länge der Erhebung in Transportrichtung an eine Längsausdehnung der fraglichen Anlagefläche des Werkstückes angepasst ist. Die Breite der Erhebung quer zur Transportrichtung ist demgegenüber an eine Querausdehnung der fraglichen Anlagefläche des Werkstückes angepasst.

Gegenstand der Erfindung ist auch eine Vorrichtung zum insbesondere hängenden Transport von vorzugsweise tafelförmigen Werkstücken mittels Unterdruck. Diese Vorrichtung ist mit zumindest einem umlaufend angetriebenen Fördergurt ausgerüstet, dessen Detailausprägung zuvor im Einzelnen beschrieben worden ist. Dabei wird der fragliche Fördergurt für die hieran anzulegenden Werkstücke an der zuvor bereits beschriebenen Haltevorrichtung in der Transportrichtung vorbeigeführt. Der Unterdruck an den Ansaugöffnungen des Fördergurtes wird dabei durch zumindest ein Gebläse erzeugt. Bei dem Gebläse kann es sich um einen Radialventilator handeln, welcher vorzugsweise ein Laufrad mit rückwärts gekrümmten Schaufeln aufweist.

Darüber hinaus ist die fragliche Vorrichtung vorteilhaft so ausgebildet, dass die Haltevorrichtung zusätzlich mit mehreren in Transportrichtung angeordneten Magnethalteelementen ausgebildet ist. Die Magnethalteelemente können dabei mit in der Transportrichtung im Gurtkörper angeordneten Stahllitzen wechselwirken. Auf diese Weise lässt sich der Fördergurt bei seinem Transport entlang der Haltevorrichtung an die Haltevorrichtung anlegen, weil die Magnethalteelemente die in den Gurtkörper eingebetteten Stahllitzen beispielsweise elektromagnetisch anziehen und einen etwaigen Durchhang des an der Haltevorrichtung entlanggeführten Fördergurtes über die Länge der Haltevorrichtung gesehen verhindern.

Der Fördergurt als solcher ist in der Regel aus einem thermoplastischen Kunststoff gefertigt. Hier kann beispielsweise mit Polyurethan gearbeitet werden, und zwar insbesondere einem 2-Komponenten Elastomer. Dieser kann eine Shore-Härte mit Werten von in etwa 85 für die Shore-A-Härte ausgerüstet sein. Die an dieser Stelle zusätzlich vorgesehene Erhebung ist in der Regel als Beschichtung ausgebildet, die ebenfalls auf Polyurethanbasis auf den Gurtkörper aufgebracht werden kann. Geeignete Beschichtungsverfahren sehen in diesem Zusammenhang eine Verbindung der Erhebung mit dem Gurtkörper durch Kleben, Schweißen, Sprühen oder Extrudieren vor. Im Allgemeinen wird an dieser Stelle mit einer extrudierten Beschichtung gearbeitet, bei der in einem Herstellungsverfahren der Gurtkörper und die Erhebung gemeinsam ausgeformt werden. Zwischenräume zwischen den einzelnen Erhebungen lassen sich anschließend ebenso wie die Saugtasche und die Ansaugöffnung durch Fräsen in den solchermaßen produzierten Grund- oder Basiskörper einbringen.

Der Rückgriff auf Polyurethan zur Herstellung des Gurtkörpers ebenso wie der Erhebungen hat den Vorteil, dass der gesamte Werkstoff nicht nur alterungsbeständig ausgebildet ist und eine hohe Belastbarkeit zeigt, sondern auch resistent gegenüber beispielsweise Ölen ausgelegt ist. Das gilt insbesondere für solche Polyurethane der Shore-A-Härte 85, was selbstverständlich nur beispielhaft gilt und keinesfalls einschränkend zu verstehen ist. Schließlich versteht es sich in diesem Zusammenhang, dass je nach Bedarf in die betreffende Saugtasche oder auch neben der Saugtasche zusätzliche Abblasöffnungen in den Fördergurt eingebracht sein können. Mithilfe dieser Abblasöffnungen lassen sich die saugend transportierten tafelförmigen Werkstücke zielgenau besonders schnell von dem Fördergurt trennen und kann ein besonders schneller und definierter Abwurf an der jeweils gewünschten Stelle nach dem Transport erreicht werden. Dazu wird die betreffende Abblasöffnung beispielsweise mit Druckluft beaufschlagt. Hierin sind die wesentlichen Vorteile zu sehen.

Nachfolgend wird die Erfindung anhand einer lediglich ein Ausführungsbeispiel darstellenden Zeichnung näher erläutert; es zeigen:
- Fig. 1: den erfindungsgemäßen Fördergurt in Verbindung mit einer hiermit ausgerüsteten Vorrichtung in einer perspektivischen Darstellung,
- Fig. 2: den Fördergurt in einer Aufsicht und
- Fig. 3: einen schematischen Querschnitt durch den Fördergurt nach der Fig. 2 im Bereich einer Erhebung mit Ansaugöffnung.

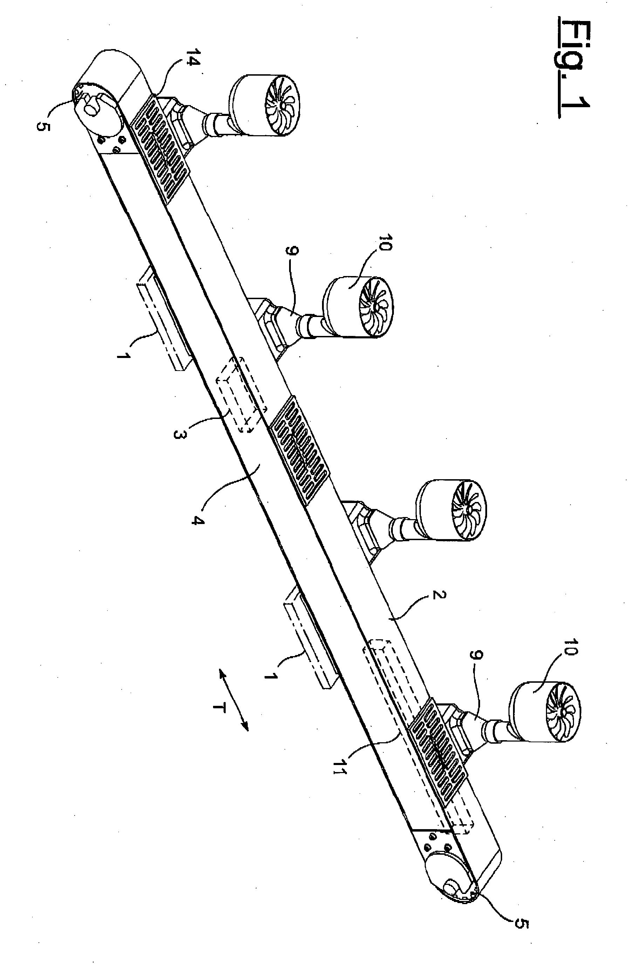

In der Fig. 1 ist eine Vorrichtung zum insbesondere hängenden Transport von tafelförmigen Werkstücken 1 mithilfe von Unterdruck dargestellt. Bei den tafelförmigen Werkstücken 1 handelt es sich nicht einschränkend um Bleche oder Platten und konkret sogenannte Bipolarplatten, die für die Herstellung von Brennstoffzellen benötigt werden, wie dies einleitend bereits beschrieben wurde. Das gilt selbstverständlich nur beispielhaft und ist keinesfalls als beschränkend zu verstehen. Dazu werden die fraglichen tafelförmigen Werkstücke 1 nicht nur mithilfe von Unterdruck an einem umlaufenden Fördergurt 2 festgehalten, sondern sind zusätzlich auch in der Fig. 1 lediglich angedeutete Magnethalteelemente 3 realisiert, die im Innern einer Haltevorrichtung 4 angeordnet sind. Tatsächlich sind nach dem Ausführungsbeispiel mehrere in Transportrichtung T angeordnete Magnethalteelemente 3 im Innern der Haltevorrichtung 4 vorgesehen.

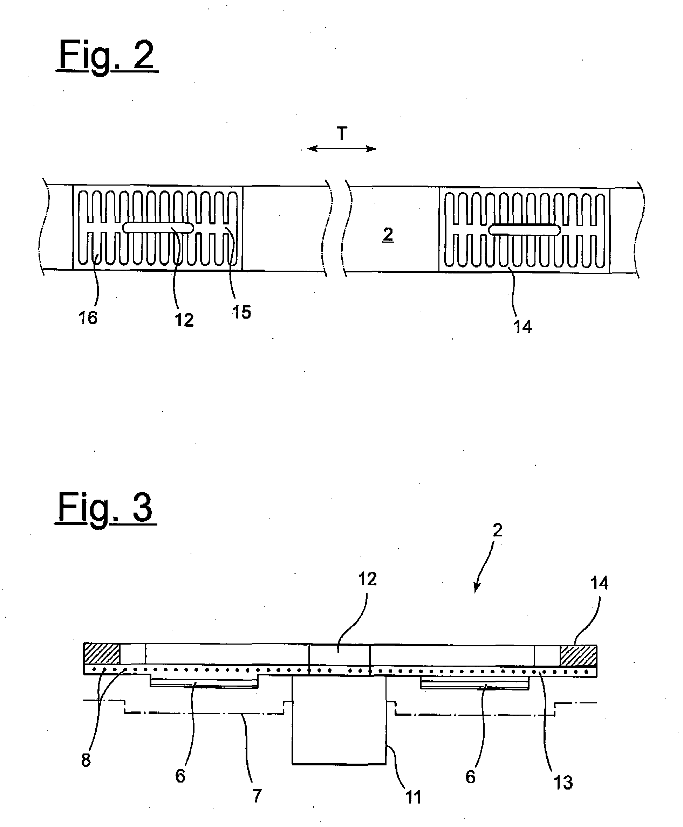

Der Fördergurt 2 wird an der fraglichen Haltevorrichtung 4 in der Transportrichtung T vorbeigeführt. Dazu sind jeweils endseitig der Haltevorrichtung 4 Zahnräder 5 vorgesehen, die zum Antrieb des als Zahnriemen ausgebildeten Fördergurtes 2 dienen. Tatsächlich verfügt der Fördergurt 2 entsprechend der Schnittdarstellung In der Fig. 3 über jeweils beidseitige Zähne bzw. Zahnreihen 6 an seiner Unterseite, in die die korrespondierend ausgebildeten Zahnräder 5 zum Antrieb des Fördergurtes 2 eingreifen. Außerdem ist der in der Schnittdarstellung nach der Fig. 3 dargestellte Fördergurt 2 zusätzlich noch mit einer antistatischen Beschichtung 7 ausgerüstet. Dadurch werden beim umlaufenden Antrieb des Fördergurtes 2 entlang der Haltevorrichtung 4 unter Berücksichtigung der jeweils endseitigen Zahnräder 5 etwaige statische Aufladungen des Fördergurtes 2 vermieden. Das ist grundsätzlich bekannt, wozu auf die einleitend bereits in Bezug genommene EP 0 893 371 B1 hinzuweisen ist. Dieser Stand der Technik zeigt auch Stahllitzen 8, die ausweislich der Schnittdarstellung in der Fig. 3 im Innern des Fördergurtes 2 bzw. seines Gurtkörpers 13 befindlich sind und sich in der Transportrichtung T erstrecken. Die mehreren ebenfalls in der Transportrichtung T im Innern der Haltevorrichtung 4 vorhandenen Magnethalteelemente 3 wechselwirken nun mit den betreffenden Stahllitzen 8 derart, dass auf diese Weise ein etwaiger Durchhang des Fördergurtes 2 bei seinem Lauf entlang der Haltevorrichtung 4 vermieden wird. Dazu wird der Fördergurt 2 magnetisch angezogen.

Anhand der Darstellung in der Fig. 1 erkennt man darüber hinaus noch mehrere Unterdruckleitungen 9, die mit der Haltevorrichtung 4 kommunizieren. Außerdem ist die jeweilige Unterdruckleitung 9 mit einem zugehörigen Gebläse 10 ausgerüstet. Dabei können sämtliche Unterdruckleitungen 9 an ein zentrales Gebläse 10 angeschlossen sein. Es ist aber auch möglich, jeweils ein eigenes Gebläse 10 für jede Unterdruckleitung 9 vorzusehen. Bei dem Gebläse 10 mag es sich um einen Radialventilator handeln, welcher ein Laufrad mit rückwärts gekrümmten Schaufeln aufweist, wie dies der einleitend bereits beschriebene Stand der Technik nach der WO 2021/089315 A1 im Detail beschreibt.

Die Unterdruckleitungen 9 münden in einen Unterdruckkanal 11 im Innern der Haltevorrichtung 4, welcher mit Ansaugöffnungen 12 in dem Gurtkörper 13 des Fördergurtes 2 kommuniziert. Neben dem Gurtkörper 13 mit den darin befindlichen Ansaugöffnungen 12 ist der Fördergurt 2 darüber hinaus mit mehreren Erhebungen 14 ausgerüstet. Die Erhebungen 14 sind dabei in der Transportrichtung T mit Abstand zueinander angeordnet und verfügen über eine Aufbauhöhe von wenigen Millimetern gegenüber dem Gurtkörper 13. Die betreffende Erhebung 14 ist dabei erfindungsgemäß eckig und mit einer ihrem Umriss folgenden Saugtasche 15, 16 ausgerüstet.

Wie bereits erläutert, stehen die einzelnen Ansaugöffnungen 12 im Gurtkörper 13 mit dem Unterdruckkanal 11 in der Haltevorrichtung 4 in Verbindung. Der Unterdruckkanal 11 wird seinerseits von dem einen bzw. den mehreren Gebläsen 10 mit Unterdruck beaufschlagt. Die betreffende Ansaugöffnung 12 mündet ihrerseits in die Saugtasche 15, 16, die sich im Innern der Erhebung 14 findet. Der Fördergurt 2 wird mit den hieran anzulegenden Werkstücken 1 an der Haltevorrichtung 4 in der Transportrichtung T vorbeigeführt. Bei diesem Vorgang werden die tafelförmigen Werkstücke 1 durch Erzeugung von Unterdruck im Unterdruckkanal 11 und damit an den Ansaugöffnungen 12 am betreffenden Fördergurt 2 festgehalten und zusammen mit dem Fördergurt 2 in der Transportrichtung T bewegt. Die jeweilige Ansaugöffnung 12 ist dazu im Bereich der zugehörigen Erhebung 14 gegenüber dem Gurtkörper 13 angeordnet.

Dadurch, dass die Erhebung 14 erfindungsgemäß mit der ihrem Umriss folgenden Saugtasche 15, 16 und der wenigstens einen in die Saugtasche 15, 16 mündenden Ansaugöffnung 12 ausgerüstet ist, lassen sich vorteilhaft die Bipolarplatten als tafelförmige Werkstücke 1 transportieren. Denn der Umriss der Erhebung 14 entspricht dabei der Anlagefläche des betreffenden tafelförmigen Werkstückes 1.

Anhand der Fig. 2 und 3 erkennt man, dass eine einzige Ansaugöffnung 12 zentral in die Saugtasche 15, 16 mündet. Grundsätzlich kann aber auch mit mehreren in die betreffende Saugtasche 15, 16 mündenden Ansaugöffnungen 12 gearbeitet werden, was allerdings nicht dargestellt Ist. Denn nach dem Ausführungsbeispiel ist jede Saugtasche 15, 16 mit jeweils einer einzigen zugehörigen Ansaugöffnung 12 ausgerüstet.

Die Ansaugöffnung 12 ist dabei längserstreckt in der Transportrichtung T ausgebildet und verfügt nach dem Ausführungsbeispiel und entsprechend der Darstellung in der Fig. 2 über einen elliptischen Querschnitt. Außerdem ist die Saugtasche 15, 16 ihrerseits mehrteilig ausgelegt. Tatsächlich ist an dieser Stelle ein in der Transportrichtung T verlaufender zentraler Längskanal 15 realisiert, der entlang einer Längssymmetrieachse des Fördergurtes 2 verläuft und auf der betreffenden Längssymmetrieachse angeordnet ist. Neben diesem einzigen und in der Transportrichtung T verlaufenden Längskanal 15 sind mehrere quer zur Transportrichtung T verlaufende Querkanäle 16 als Bestandteile der Saugtasche 15, 16 realisiert. Die Querkanäle 16 verlaufen dabei jeweils beidseitig des zentralen Längskanals 15. Außerdem ist die Auslegung so getroffen, dass die Querkanäle 16 bis jeweils an den Rand der Erhebung 14 reichen. Anhand der Darstellung in der Fig. 2 erkennt man, dass die Querkanäle 16 jeweils kammartig sowie gleich beabstandet von dem zentralen Längskanal 15 ausgehen. Außerdem schließt der zentrale Längskanal 15 jeweils beidseitig an die zentrale Ansaugöffnung 12 an.

Die Erhebung 14 ist nach dem Ausführungsbeispiel insgesamt rechteckförmig ausgebildet. Dabei ist eine Länge der Erhebung 14 in der Transportrichtung T an eine Längsausdehnung der Anlagefläche des tafelförmigen Werkstückes 1 angepasst. Die Breite der Erhebung 14 quer zur Transportrichtung T ist demgegenüber an eine Querausdehnung der betreffenden Anlagefläche des tafelförmigen Werkstückes 1 angepasst. Man erkennt, dass die Breite der Erhebung 14 der Breite des Gurtkörpers 13 entspricht.

Sowohl der Bereich zwischen den einzelnen Erhebungen 14 in der Transportrichtung T als auch die Saugtasche 15, 16 ebenso wie die Ansaugöffnung 12 sind jeweils in den Fördergurt 2 durch entsprechende Fräsvorgänge eingebracht worden. Dadurch verfügt der solchermaßen realisierte Fördergurt 2 über einen materialeinheitlichen und homogenen Querschnitt, so dass etwaige Ablösungen der jeweiligen Erhebung 14 beim Lauf über die endseitigen Zahnräder 5 nicht zu befürchten sind.

## Patentansprüche

1. Fördergurt für den Transport von Werkstücken (1), insbesondere für den hängenden Transport von tafelförmigen Werkstücken (1) wie Blechen oder Platten, mit einem Gurtkörper (13) mit Ansaugöffnungen (12), welche mit einem Unterdruckkanal (11) in einer Haltevorrichtung (4) in Verbindung stehen, wobei der Fördergurt (2) mit den hieran anzulegenden Werkstücken (1) an der Haltevorrichtung (4) in Transportrichtung (T) vorbeigeführt und die Werkstücke (1) durch Erzeugung von Unterdruck im Unterdruckkanal (11) und damit an den Ansaugöffnungen (12) am Fördergurt (2) festgehalten und zusammen mit dem Fördergurt (2) in der Transportrichtung (T) bewegt werden, und wobei die jeweilige Ansaugöffnung (12) im Bereich einer zugehörigen Erhebung (14) gegenüber dem Gurtkörper (13) angeordnet ist,
**dadurch gekennzeichnet, dass**
die eckige Erhebung (14) mit einer ihrem Umriss folgenden Saugtasche (15, 16) und der wenigstens einen in die Saugtasche (15, 16) mündenden Ansaugöffnung (12) ausgebildet ist.

2. Fördergurt (2) nach Anspruch 1, **dadurch gekennzeichnet, dass** die einzige Ansaugöffnung (12) zentral in die Saugtasche (15, 16) mündet.

3. Fördergurt (2) nach Anspruch 1 oder 2, **dadurch gekennzeichnet, dass** die Ansaugöffnung (12) längserstreckt in der Transportrichtung (T) ausgebildet ist.

4. Fördergurt (2) nach Anspruch 3, **dadurch gekennzeichnet, dass** die Ansaugöffnung (12) einen elliptischen Querschnitt aufweist.

5. Fördergurt (2) nach einem der Ansprüche 1 bis 4, **dadurch gekennzeichnet, dass** die Saugtasche (15, 16) mehrteilig mit in Transportrichtung (T) verlaufendem Längskanal (15) und wenigstens einem quer zur Transportrichtung (T) verlaufenden Querkanal (16) ausgebildet ist..

6. Fördergurt (2) nach Anspruch 5, **dadurch gekennzeichnet, dass** mehrere Querkanäle (16) vorgesehen sind.

7. Fördergurt (2) nach Anspruch 6, **dadurch gekennzeichnet, dass** die Querkanäle (16) beidseitig eines zentralen Längskanals (15) verlaufen.

8. Fördergurt (2) nach Anspruch 7, **dadurch gekennzeichnet, dass** der zentrale Längskanal (15) jeweils beidseitig an die zentrale Ansaugöffnung (12) anschließt.

9. Fördergurt (2) nach Anspruch 6, 7 oder 8, **dadurch gekennzeichnet, dass** die Querkanäle (16) bis jeweils zum Rand der Erhebung (14) reichen.

10. Fördergurt (2) nach einem der Ansprüche 6 bis 9, **dadurch gekennzeichnet, dass** die Querkanäle (16) jeweils kammartig sowie gleich beabstandet von dem zentralen Längskanal (15) ausgehen.

11. Fördergurt (2) nach einem der Ansprüche 1 bis 10, **dadurch gekennzeichnet, dass** die Erhebung (14) rechteckförmig ausgebildet ist.

12. Fördergurt (2) nach einem der Ansprüche 1 bis 11, **dadurch gekennzeichnet, dass** die Länge der Erhebung (14) in der Transportrichtung (T) an eine Längsausdehnung einer Anlagefläche des tafelförmigen Werkstückes (1) angepasst ist.

13. Fördergurt (2) nach einem der Ansprüche 1 bis 12, **dadurch gekennzeichnet, dass** die Breite der Erhebung (14) quer zur Transportrichtung (T) an eine Querausdehnung der Anlagefläche des tafelförmigen Werkstückes (1) angepasst ist.

14. Vorrichtung zum insbesondere hängenden Transport von vorzugsweise tafelförmigen Werkstücken (1) mittels Unterdruck, mit zumindest einem umlaufend angetriebenen Fördergurt (2) nach einem der Ansprüche 1 bis 13, wobei eine Haltevorrichtung (4) die Werkstücke (1) durch Erzeugung von Unterdruck an den Ansaugöffnungen (12) des Fördergurtes (2) am Fördergurt (2) werkstückseitig festhält, und wobei der Unterdruck durch zumindest ein Gebläse (10) erzeugt wird.

15. Vorrichtung nach Anspruch 14, **dadurch gekennzeichnet, dass** die Haltevorrichtung (4) mit mehreren in der Transportrichtung (T) angeordneten Magnethalteelementen (3) ausgebildet ist, welche mit in Transportrichtung (T) im Gurtkörper (13) angeordneten Stahllitzen (8) wechselwirken.

## Geänderte Patentansprüche

### Geänderte Patentansprüche gemäss Regel 137(2) EPÜ.

1. Fördergurt für den Transport von Werkstücken (1), insbesondere für den hängenden Transport von tafelförmigen Werkstücken (1) wie Blechen oder Platten, mit einem Gurtkörper (13) mit Ansaugöffnungen (12), welche mit einem Unterdruckkanal (11) in einer Haltevorrichtung (4) in Verbindung stehen, wobei der Fördergurt (2) mit den hieran anzulegenden Werkstücken (1) an der Haltevorrichtung (4) in Transportrichtung (T) vorbeigeführt und die Werkstücke (1) durch Erzeugung von Unterdruck im Unterdruckkanal (11) und damit an den Ansaugöffnungen (12) am Fördergurt (2) festgehalten und zusammen mit dem Fördergurt (2) in der Transportrichtung (T) bewegt werden, wobei ferner die jeweilige Ansaugöffnung (12) im Bereich einer zugehörigen Erhebung (14) gegenüber dem Gurtkörper (13) angeordnet ist, und wobei die eckige Erhebung (14) mit einer ihrem Umriss folgenden Saugtasche (15, 16) und der wenigstens einen in die Saugtasche (15, 16) mündenden Ansaugöffnung (12) ausgebildet ist.
**dadurch gekennzeichnet, dass**
die Saugtasche (15, 16) mehrteilig mit in Transportrichtung (T) verlaufendem Längskanal (15) und wenigstens einem quer zur Transportrichtung (T) verlaufenden Querkanal (16) ausgebildet ist, wobei mehrere Querkanäle (16) vorgesehen sind, und wobei die Querkanäle (16) beidseitig eines zentralen Längskanals (15) verlaufen.

2. Fördergurt (2) nach Anspruch 1, **dadurch gekennzeichnet, dass** die einzige Ansaugöffnung (12) zentral in die Saugtasche (15, 16) mündet.

3. Fördergurt (2) nach Anspruch 1 oder 2, **dadurch gekennzeichnet, dass** die Ansaugöffnung (12) längserstreckt in der Transportrichtung (T) ausgebildet ist.

4. Fördergurt (2) nach Anspruch 3, **dadurch gekennzeichnet, dass** die Ansaugöffnung (12) einen elliptischen Querschnitt aufweist.

5. Fördergurt (2) nach Anspruch 1 bis 4, **dadurch gekennzeichnet, dass** der zentrale Längskanal (15) jeweils beidseitig an die zentrale Ansaugöffnung (12) anschließt.

6. Fördergurt (2) nach einem der Ansprüche 1 bis 5, **dadurch gekennzeichnet, dass** die Querkanäle (16) bis jeweils zum Rand der Erhebung (14) reichen.

7. Fördergurt (2) nach einem der Ansprüche 1 bis 6, **dadurch gekennzeichnet, dass** die Querkanäle (16) jeweils kammartig sowie gleich beabstandet von dem zentralen Längskanal (15) ausgehen.

8. Fördergurt (2) nach einem der Ansprüche 1 bis 7, **dadurch gekennzeichnet, dass** die Erhebung (14) rechteckförmig ausgebildet ist.

9. Fördergurt (2) nach einem der Ansprüche 1 bis 8, **dadurch gekennzeichnet, dass** die Länge der Erhebung (14) in der Transportrichtung (T) an eine Längsausdehnung einer Anlagefläche des tafelförmigen Werkstückes (1) angepasst ist.

10. Fördergurt (2) nach einem der Ansprüche 1 bis 9, **dadurch gekennzeichnet, dass** die Breite der Erhebung (14) quer zur Transportrichtung (T) an eine Querausdehnung der Anlagefläche des tafelförmigen Werkstückes (1) angepasst ist.

11. Vorrichtung zum insbesondere hängenden Transport von vorzugsweise tafelförmigen Werkstücken (1) mittels Unterdruck, mit zumindest einem umlaufend angetriebenen Fördergurt (2) nach einem der Ansprüche 1 bis 10, wobei eine Haltevorrichtung (4) die Werkstücke (1) durch Erzeugung von Unterdruck an den Ansaugöffnungen (12) des Fördergurtes (2) am Fördergurt (2) werkstückseitig festhält, und wobei der Unterdruck durch zumindest ein Gebläse (10) erzeugt wird.

12. Vorrichtung nach Anspruch 11, **dadurch gekennzeichnet, dass** die Haltevorrichtung (4) mit mehreren in der Transportrichtung (T) angeordneten Magnethalteelementen (3) ausgebildet ist, welche mit in Transportrichtung (T) im Gurtkörper (13) angeordneten Stahllitzen (8) wechselwirken.
